# FASCICULE DE BREVET EUROPEEN

(11) **EP 3 707 017 B1**
(45) Date de publication et mention de la délivrance du brevet: **19.07.2023**
(21) Numéro de dépôt: 18797160.1
(22) Date de dépôt: 05.11.2018
(51) Int. Cl.: B60C 23/04, B29D 30/00

(54) **ENSEMBLE ELECTRONIQUE AVEC PATCH POUR PNEUMATIQUE**
ELEKTRONISCHE BAUGRUPPE MIT EINEM FLICKEN FÜR EINEN REIFEN
ELECTRONIC ASSEMBLY WITH A PATCH FOR A TYRE

(30) Priorité: 08.11.2017 FR 1771176
(43) Date de publication de la demande: 16.09.2020
(73) Titulaire: Compagnie Générale des Etablissements Michelin, 63000 Clermont-Ferrand (FR)
(72) Inventeur: FAGOT-REVURAT, Lionel, 63040 Clermont-Ferrand Cedex 09 (FR); MOSNIER, Thomas, 63040 Clermont-Ferrand Cedex 09 (FR)
(74) Mandataire: Béniguel, Jean-François Joseph Emile
(86) Numéro de dépôt international: PCT/IB2018/058651
(87) Numéro de publication internationale: WO 2019/092573

(56) Documents cités:
- EP-A1- 2 777 958
- EP-A2- 0 689 950
- Dennis: "USB Stick Corsair Flash Voyager GT im Test", , 24 mai 2014 (2014-05-24), XP002782384, Extrait de l'Internet: URL:http://www.usb-stick-tests.de/test-29- corsair_flash_voyager_gt_im_test [extrait le 2018-06-05]

## Description

### DOMAINE TECHNIQUE DE L'INVENTION

La présente invention concerne un ensemble électronique pour pneumatique comprenant un patch pourvu d'un logement adapté pour loger un module électronique.

### ETAT DE LA TECHNIQUE ANTERIEURE

De manière générale, deux solutions permettant de fixer des modules électroniques de pneumatique sont connues.

La première solution consiste à intégrer un module électronique au pneumatique en le rendant définitivement fixe. Pour ce faire, le module électronique est mécaniquement et irréversiblement solidaire du pneumatique. Un tel agencement permet de fiabiliser la fixation du module, qui ne présente aucun risque de désolidarisation du pneumatique. Cette solution empêche cependant le remplacement ou la modification du module électronique. Elle n'est donc pas compatible avec les systèmes électroniques prévus pour être amovibles.

Par exemple, le document FR2870031 décrit un procédé de surveillance de pneumatique équipant un véhicule terrestre. Ce procédé est mis en oeuvre au moyen d'une unité centrale de contrôle, et de puces électroniques implantées dans les flancs du pneumatique. Les puces d'un même pneumatique portent des codes d'identification identiques ainsi que des codes respectifs représentatifs de leurs implantations sur ce pneumatique.

La seconde solution prévoit l'intégration d'un module électronique à l'aide d'un patch, souvent de matériau caoutchoutique, dans lequel le module est logé de façon amovible.

Par exemple, le document FR3028451 décrit un dispositif de fixation à la paroi interne d'un pneumatique, d'un boîtier électronique de mesure de paramètres à l'intérieur du pneumatique, le dispositif associant ledit boîtier à un réceptacle souple qui venant se fixer à ladite paroi interne par un moyen d'adhésion, est préformé pour accueillir et retenir ledit boîtier, remarquable en ce que ledit réceptacle souple forme un compartiment équipé d'une ouverture, par laquelle est introduit ledit boîtier et qui est bordée par un rebord s'étendant extérieurement et proposant une surface de contact pour le moyen d'adhésion de sorte qu'une fois le réceptacle fixé, ladite ouverture est fermée par la paroi interne sur laquelle le réceptacle est fixé. Par conséquent, une fois le réceptacle fixé à la paroi du pneumatique, le module électronique n'est amovible que si l'on décolle le réceptacle. Ce dernier doit donc être changé à chaque fois que le module électronique est extrait.

Le document EP2777958 décrit un enrobage d'élastomère comprenant une pièce en caoutchouc contenant une cavité pour tenir de manière amovible un module destiné à être utilisé pour aider le fonctionnement d'un pneumatique. La cavité est configurée avec une ouverture pour faciliter l'insertion et le retrait du module de la cavité. L'enrobage d'élastomère comprend une composition de caoutchouc non durci ou partiellement durci. Dans la plupart des modes de réalisations présentés, la fente permettant d'insérer le module électronique se situe sur le dessus de la pièce en caoutchouc.

Le document EP0689950 décrit un dispositif de surveillance des conditions de fonctionnement de pneumatiques. Le dispositif comporte une enveloppe pourvue d'une cavité permettant de loger un module électronique. L'enveloppe comporte une ouverture en communication fluidique avec la cavité du pneumatique.

Dans ces deux configurations, la fermeture de la cavité n'est pas étanche. La disposition de la fente présente des risques d'éjection du module. Une configuration avec une ouverture latérale est présentée. Toutefois, cette ouverture n'est pas refermable et le module reste exposé aux éventuels contaminants, fluides et poussières susceptibles de se trouver dans la cavité du pneumatique.

Les solutions révélées par l'état de la technique présentent certaines imperfections quels que soient leurs agencements. Il subsiste par conséquent un besoin pour une solution efficace permettant de fixer un module électronique à une paroi interne de pneumatique de façon amovible, tout en minimisant le risque de dommage causé au pneumatique si un module venait à se détacher de son point de fixation.

Pour pallier ces différents inconvénients, l'invention prévoit différents moyens techniques.

### EXPOSE DE L'INVENTION

**Un** premier objectif de l'invention consiste à prévoir un moyen de fixation pour un module électronique contre une paroi interne d'un pneumatique.

**Un** autre objectif de l'invention consiste à prévoir un moyen de protection d'un module électronique prévu pour fixation contre une paroi interne d'un pneumatique.

Encore un objectif de l'invention consiste à prévoir un moyen de fixation pour un module électronique permettant de réaliser une mise en place et un retrait simple du module électronique dans le moyen de fixation.

Un autre objectif de l'invention consiste à prévoir un moyen de fixation étanche protégeant le module électronique contre les contaminants éventuels susceptible d'affecter son bon fonctionnement.

Enfin, un autre objectif de l'invention consiste à prévoir un système de fixation protégeant la paroi interne du pneumatique en cas de désolidarisation.

Pour ce faire, l'invention prévoit un ensemble électronique pour pneumatique comprenant un module électronique, un patch caoutchoutique pourvu d'un logement adapté pour permettre le positionnement d'une partie active du module électronique dans ledit logement, dans lequel :
- le patch est configuré selon un profil axial sensiblement allongé avec une embase et un dessus séparés par une paroi latérale, ledit patch comportant une ouverture latérale communiquant avec le logement, pour insertion et retrait de la partie active du module électronique dans ledit logement, ladite ouverture étant agencée sur la paroi latérale;
- le module électronique est configuré selon un profil axial sensiblement allongé et comporte une tête de préhension s'étendant axialement de façon à se prolonger hors du patch lorsque la partie active module électronique est positionnée dans le logement ;
- la tête de préhension du module électronique est recouverte d'une enveloppe de protection caoutchoutique dont le profil est prévu pour effectuer une fermeture sensiblement étanche du patch lorsque la partie active du module électronique (30) est positionnée dans son logement.

Le patch procure une protection efficace contre la poussière, les fluides et tout contaminant susceptible de se trouver dans la cavité interne du pneumatique. Un tel ensemble permet de fournir une protection efficace recouvrant la totalité de la surface du module électronique. En cas de détachement involontaire du patch, le risque d'endommagement du pneumatique est ainsi considérablement réduit. Le patch permet également de produire un découplage mécanique entre le module électronique et la paroi du pneumatique sur lequel le patch est fixé.

De manière avantageuse, le patch comprend un orifice latéral prévu pour être en communication fluidique avec la cavité du pneumatique lorsque le patch est fixé contre la paroi interne du pneumatique.

Cette caractéristique permet une arrivée d'air en provenance de la cavité du pneumatique et permet ainsi de mesurer les paramètres de fonctionnement du pneumatique, comme par exemple la pression et la température. L'orifice est de préférence calibré ou pourvu d'un filtre pour éviter l'arrivée de poussières ou contaminants dans le logement du patch.

Egalement de manière avantageuse, le patch et le logement de module électronique ont, du côté opposé à l'ouverture latérale, un profil axial sensiblement conique. Cette forme avec un profil rétrécissant facilite l'insertion du module dans le logement. Le profil est avantageusement similaire à celui de l'antenne.

Selon un mode de réalisation avantageux, le patch et le logement de module électronique ont, du côté de ladite ouverture latérale, un profil axial sensiblement arrondi.

Selon un autre mode de réalisation avantageux, le logement de module électronique comporte deux zones, soit une zone d'antenne, du côté du profil axial sensiblement conique, et une zone de composants électroniques, du côté du profil axial sensiblement arrondi.

Selon encore un autre mode de réalisation avantageux, la zone de composants électroniques comporte une épaisseur supérieure à la zone d'antenne.

Ces caractéristiques permettent le bon positionnement du module électronique dans le patch ainsi qu'un très bon maintien.

De manière avantageuse, le logement est situé à une distance « d » de l'embase. Cette architecture procure un découplage mécanique entre le module électronique et le pneumatique. Le module électronique est ainsi protégé des déformations du pneumatique qui seraient susceptibles de l'endommager.

Egalement de manière avantageuse, une chambre d'air est agencée sous le logement.

Selon un mode de réalisation avantageux, l'ensemble comprend un insert de mousse poreuse, pour insertion dans ladite chambre d'air.

Cette caractéristique permet de protéger le module électronique contre d'éventuelles poussières ou contaminants susceptible de pénétrer dans le logement.

Selon un autre mode de réalisation avantageux, la surface de l'ouverture est sensiblement inférieure, par exemple d'environ 10%, à la surface transversale maximale du module électronique.

Cette architecture permet au module électronique de rester en place dans le logement après insertion dans ce dernier. L'ouverture de surface réduite forme une restriction agissant comme un dispositif de maintien et/ou de blocage. L'ouverture étant plus étroite que la partie la plus large du module électronique, celui-ci ne risque pas de sortir du patch de façon involontaire.

De manière avantageuse, le module électronique est conçu pour fournir des données d'identification du pneumatique et des données en relation avec les paramètres physiques de fonctionnement du pneumatique sur lequel l'ensemble est fixé.

Cette caractéristique permet d'assurer la traçabilité du pneumatique et d'obtenir des données en relation avec le fonctionnement tel que la pression, la température, etc.

### DESCRIPTION DES FIGURES

Tous les détails de réalisation sont donnés dans la description qui suit, complétée par les figures 1a à 5, présentées uniquement à des fins d'exemples non limitatifs, et dans lesquelles :
- la figure 1a est une vue en perspective d'un exemple d'un ensemble électronique;
- la figure 1b est une vue de dessus de l'ensemble électronique de la figure 1a ;
- la figure 2 est une vue en perspective d'un exemple de module électronique ;
- la figure 3a est une vue en perspective du module électronique de la figure 2 avec une enveloppe de protection ;
- la figure 3b est une vue de dessus du module électronique de la figure 3a avec l'enveloppe de protection ;
- la figure 4a est une vue en perspective d'un exemple de patch ;
- la figure 4b est une vue de dessous du patch de la figure 4a ;
- la figure 4c est une coupe longitudinale du patch de la figure 4a afin de montrer le logement interne;
- la figure 4d est une coupe en élévation du patch de la figure 4a;
- la figure 5 est une vue en élévation de l'arrière d'un exemple de patch sur lequel est posé un couvercle de protection.

### DESCRIPTION DETAILLEE DE L'INVENTION

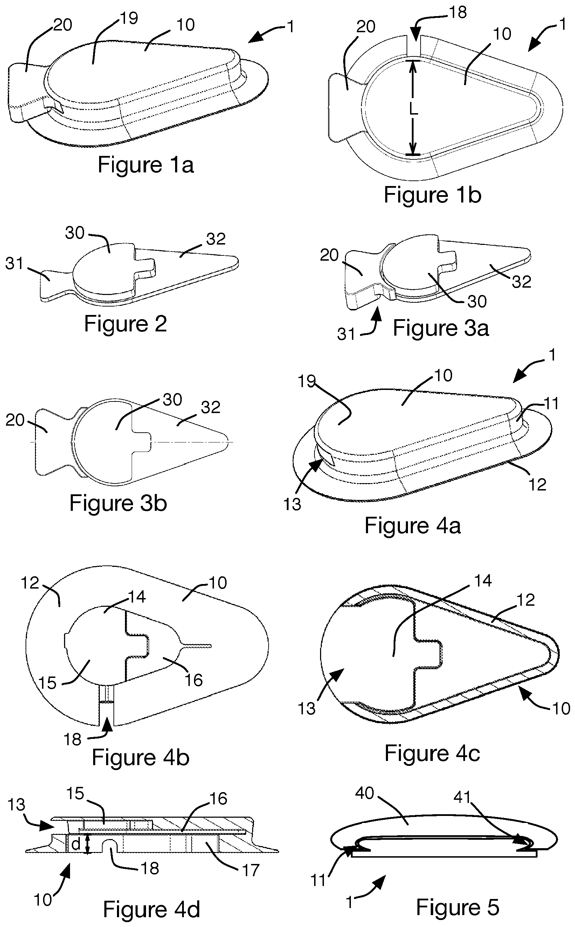

Tel qu'illustré aux figures 1a, 1b, 2, 3a et 3b, l'ensemble électronique 1 pour pneumatique est constitué d'un module électronique 30 comportant une tête de préhension 31, d'un patch caoutchoutique 10 pourvu d'un logement 14 pour insertion du module électronique 30, et d'une enveloppe de protection 20 caoutchoutique spécifiquement prévue pour recouvrir la tête de préhension 31 du module électronique 30.

Le module électronique 30 est conçu pour fournir des données d'identification du pneumatique et des données en relation avec les paramètres physiques de fonctionnement du pneumatique sur lequel l'ensemble (1) est fixé.

Tel qu'illustré aux figures 2, 3a et 3b, le module électronique 30 est sensiblement allongé, configuré selon un profil axial, orienté selon l'axe A-A. Il comporte, également orientée selon l'axe A-A, une tête de préhension 31 conçue de façon à se prolonger hors du patch 10 lorsque la partie active du module électronique 30 est positionnée dans le logement 14 du patch. La tête de préhension permet à un utilisateur de manipuler le module électronique pour l'insérer et/ou l'extraire du patch. Dans les exemples illustrés, par exemple aux figures 4b et 4d, le module électronique est prévu avec une zone 16 d'antenne, et une zone de composants électronique (autres que l'antenne). Tel qu'illustré, la zone 15 de composants électroniques comporte une épaisseur supérieure à la zone 16 d'antenne, cette dernière étant facilement réalisable avec une épaisseur minimaliste.

Dans les exemples illustrés, la zone mince d'antenne est de préférence prévue avec un profil axial sensiblement conique. La zone 15 de composants est agencée avec un profil axial sensiblement circonférentiel.

Le patch est illustré aux figures 1a et 1b. Il comprend un logement 14 adapté pour permettre de loger la partie active du module électronique 30.

A l'image du module électronique qu'il loge et protège, le patch 10 est configuré selon un profil axial sensiblement allongé avec une embase 12 et un dessus 19 séparés par une paroi latérale 11.

Tel qu'illustré en particulier aux figures 4a et 4c, le patch 10 comporte une ouverture latérale 13 communiquant avec le logement 14. Cette ouverture latérale 13 permet l'insertion et/ou le retrait de la partie active du module électronique 30 dans le logement 14. Cette ouverture 13 est agencée sur la paroi latérale 11, du côté du profil circonférentiel. La surface de l'ouverture 13 est sensiblement inférieure à la surface maximale transversale du module électronique 30 de façon à produire une fermeture avec un léger serrage, suffisant pour rendre la mise en place et la fermeture étanche. L'écart de surface est avantageusement de l'ordre de 10%.

Un orifice latéral 18, visible aux figures 4b et 4d permet une mise en communication fluidique avec la cavité du pneumatique lorsque le patch 10 est mis en place contre la paroi interne du pneumatique.

A l'image du module électronique 30, le patch 10 et le logement 14 de module électronique ont, du côté opposé à l'ouverture latérale 13, un profil axial sensiblement conique. Par ailleurs, du côté de ladite ouverture latérale 13, la patch a un profil axial sensiblement circonférentiel.

Egalement de façon à correspondre à l'architecture du module électronique 30, le logement 14 de module électronique comporte deux zones, soit une zone 16 d'antenne, du côté du profil axial sensiblement conique, et une zone 15 de composants électroniques, du côté du profil axial sensiblement circonférentiel.

La zone 15 de composants électroniques comporte une épaisseur supérieure à la zone 16 d'antenne.

Comme le montre la figure 4d, le logement 14 est situé à une distance « d » de l'embase 12. Une chambre d'air 17 est agencée sous le logement 14. Cette chambre sert par exemple à loger un insert de mousse poreuse, pour protéger les composants électroniques

Pour rendre l'ensemble électronique homogène, et bien protéger le module électronique, la tête de préhension 31 du module électronique 30 est recouverte d'une enveloppe de protection 20 caoutchoutique, tel que montré par exemple aux figures 3a et 3b. Cette enveloppe est prévue pour effectuer une fermeture sensiblement étanche du patch 10 lorsque la partie active du module électronique 30 est logée dans son logement 14.

### SYSTEME ET PROCEDE DE RECHAPAGE

La figure 5 illustre un autre aspect de l'invention, concernant un procédé et un système de rechapage de pneumatiques comportant un ensemble électronique tel que préalablement décrit fixé à une paroi interne d'un pneumatique.

Dans le système prévu, tel qu'illustré à la figure 5, le patch comporte des parois latérales externes 11 inclinées pour former un profil externe en queue d'aronde. Le système comprend également un couvercle 40 de protection du patch 10 caoutchoutique adapté pour recouvrir ledit patch. A l'image des parois externes du patch 10, le couvercle 40 de protection comprend des parois latérales internes 41 inclinées pour former un profil interne en queue d'aronde adapté pour procurer un maintien du couvercle 40 contre le patch 10. Le couvercle peut aisément être mis en place par exemple en le clipsant contre le patch. Pour faciliter son retrait, le couvercle 40 est déformable élastiquement de façon à pouvoir le déclipser du patch. Le couvercle mis en place contre le patch protège ce dernier lors de l'opération de vulcanisation prévue en fin d'un cycle de procédé de rechapage de pneumatique. La vulcanisation de la nouvelle bande de roulement est ainsi effectuée sans risque d'endommager le patch, qui pourrait autrement se fissurer ou former des zones d'amorce de rupture sans une telle protection. A cet effet, le couvercle 40 est avantageusement réalisé en silastène.

Grâce au système de rechapage préalablement décrit, et plus particulièrement grâce au couvercle 40, un procédé de rechapage avantageux peut être mis en oeuvre. Cette mise en oeuvre prévoit en outre un retrait du module électronique 30 du patch 10 servant de fixation afin d'éviter que cet élément, particulièrement fragile et sensible à la chaleur et à la pression, soit endommagé du fait des conditions extrêmes dues à la phase de vulcanisation. Une nouvelle bande de roulement est appliquée sur le pneumatique. Une éventuelle étape de préparation de la surface de réception de la bande de roulement est avantageusement effectuée, afin d'optimiser la pose et favoriser un maintien durable de la nouvelle bande de roulement. Un couvercle de protection 40 résistant à la vulcanisation est posé contre le patch de façon à recouvrir ce dernier. Cette étape intervient avant la vulcanisation, et éventuellement, avant la pose de la nouvelle bande de roulement. L'étape de vulcanisation du pneumatique avec la nouvelle bande de roulement est ensuite mise en oeuvre, le couvercle 40 faisant office de protection du patch. Après démoulage, le couvercle de protection 40 du patch peut être retiré, et le module électronique 30 réinséré dans le patch caoutchoutique 10.

**Ce** procédé de rechapage permet de mettre en place et vulcaniser une nouvelle bande de roulement sur une carcasse de pneumatique comportant un ensemble électronique tel que préalablement décrit.

### Numéros de référence employés sur les figures

- 1: Ensemble électronique

- 10: Patch caoutchoutique
- 11: Paroi latérale externe du patch (inclinée)
- 12: Embase
- 13: Ouverture
- 14: Logement
- 15: Zone de composants
- 16: Zone d'antenne
- 17: Chambre d'air
- 18: Orifice communiquant
- 19: Dessus du patch

- 20: Enveloppe de protection caoutchoutique

- 30: Module électronique
- 31: Tête de préhension
- 32: Antenne

- 40: Couvercle de protection
- 41: Paroi latérale interne (inclinée et sensiblement correspondante à la paroi externe du patch)

## Revendications

1. Ensemble électronique (1) pour pneumatique comprenant un module électronique (30), un patch caoutchoutique (10) pourvu d'un logement (14) adapté pour permettre le positionnement d'une partie active du module électronique (30) dans ledit logement (14), dans lequel :
- le patch (10) est configuré selon un profil axial sensiblement allongé avec une embase (12) et un dessus (19) séparés par une paroi latérale (11), ledit patch (10) comportant une ouverture latérale (13) communiquant avec le logement (14), pour insertion et retrait de la partie active du module électronique (30) dans ledit logement (14), ladite ouverture (13) étant agencée sur la paroi latérale (11) ;
- le module électronique (30) est configuré selon un profil axial sensiblement allongé et comporte une tête de préhension (31) s'étendant axialement de façon à se prolonger hors du patch (10) lorsque la partie active du module électronique (30) est positionnée dans le logement (14) ;
ledit ensemble électronique (1) étant **caractérisé en ce que** la tête de préhension (31) du module électronique (30) est recouverte d'une enveloppe de protection (20) caoutchoutique dont le profil est prévu pour effectuer une fermeture sensiblement étanche du patch (10) lorsque la partie active du module électronique (30) est positionnée dans son logement (14).

2. Ensemble électronique (1) selon la revendication 1, dans lequel le patch (10) comprend un orifice latéral (18) prévu pour être en communication fluidique avec la cavité du pneumatique lorsque le patch (10) est fixé contre la paroi interne du pneumatique.

3. Ensemble électronique (1) selon l'une des revendications 1 ou 2, dans lequel le patch (10) et le logement (14) de module électronique (30) ont, du côté opposé à l'ouverture latérale (13), un profil axial sensiblement conique.

4. Ensemble électronique (1) selon l'une quelconque des revendications précédentes, dans lequel le patch (10) et le logement (14) de module électronique (30) ont, du côté de ladite ouverture latérale (13), un profil axial sensiblement circonférentiel.

5. Ensemble électronique (1) selon l'une quelconque des revendications précédentes, dans lequel le logement (14) de module électronique (30) comporte deux zones, soit une zone (16) d'antenne, du côté du profil axial sensiblement conique, et une zone (15) de composants électroniques, du côté du profil axial sensiblement circonférentiel.

6. Ensemble électronique (1) selon la revendication 5, dans lequel la zone (15) de composants électroniques comporte une épaisseur supérieure à la zone (16) d'antenne.

7. Ensemble électronique (1) selon l'une quelconque des revendications précédentes, dans lequel le logement (14) est situé à une distance « d » de l'embase (12).

8. Ensemble électronique (1) selon la revendication 7, dans lequel une chambre d'air (17) est agencée sous le logement (14).

9. Ensemble électronique (1) selon la revendication 8, comprenant un insert de mousse poreuse, pour insertion dans ladite chambre d'air (17).

10. Ensemble électronique (1) selon l'une quelconque des revendications précédentes, dans lequel la surface de l'ouverture (13) est sensiblement inférieure à la surface maximale transversale du module électronique (30).

11. Ensemble électronique (1) selon l'une quelconque des revendications précédentes, dans lequel le module électronique (30) est conçu pour fournir des données d'identification du pneumatique et des données en relation avec les paramètres physiques de fonctionnement du pneumatique sur lequel l'ensemble (1) est fixé.

## Patentansprüche

1. Elektronische Baugruppe (1) für einen Reifen, die ein elektronisches Modul (30), einen Kautschukflicken (10), der über eine Aufnahme (14) verfügt, die dazu angepasst ist, die Positionierung eines aktiven Teils des elektronischen Moduls (30) in der Aufnahme (14) zu gestatten, beinhaltet, wobei:
- der Flicken (10) gemäß einem im Wesentlichen länglichen axialen Profil mit einem Unterteil (12) und einem Oberteil (19), die durch eine Seitenwand (11) getrennt sind, konfiguriert ist, wobei der Flicken (10) eine seitliche Öffnung (13) umfasst, die mit der Aufnahme (14) kommuniziert, um den aktiven Teil des elektronischen Moduls (30) in die Aufnahme (14) einsetzen und daraus entfernen zu können, wobei die Öffnung (13) an der Seitenwand (11) eingerichtet ist;
- das elektronische Modul (30) gemäß einem im Wesentlichen länglichen axialen Profil konfiguriert ist und einen Greifkopf (31) umfasst, der sich axial so erstreckt, dass er über den Flicken (10) hinaus nach außen ragt, wenn der aktive Teil des elektronischen Moduls (30) in der Aufnahme (14) positioniert ist;
wobei die elektronische Baugruppe (1) **dadurch gekennzeichnet ist, dass** der Greifkopf (31) des elektronischen Moduls (30) von einer Kautschukschutzhülle (20) abgedeckt ist, deren Profil dazu vorgesehen ist, einen im Wesentlichen dichten Verschluss des Flickens (10) herzustellen, wenn der aktive Teil des elektronischen Moduls (30) in seiner Aufnahme (14) positioniert ist.

2. Elektronische Baugruppe (1) nach Anspruch 1, wobei der Flicken (10) ein seitliches Loch (18) beinhaltet, das dazu vorgesehen ist, mit dem Hohlraum des Reifens in Fluidkommunikation zu stehen, wenn der Flicken (10) an der Innenwand des Reifens befestigt ist.

3. Elektronische Baugruppe (1) nach einem der Ansprüche 1 oder 2, wobei der Flicken (10) und die Aufnahme (14) des elektronischen Moduls (30) auf der der seitlichen Öffnung (13) gegenüberliegenden Seite ein im Wesentlichen konisches axiales Profil aufweisen.

4. Elektronische Baugruppe (1) nach einem beliebigen der vorhergehenden Ansprüche, wobei der Flicken (10) und die Aufnahme (14) des elektronischen Moduls (30) auf der Seite der seitlichen Öffnung (13) ein im Wesentlichen kreisförmiges axiales Profil aufweisen.

5. Elektronische Baugruppe (1) nach einem beliebigen der vorhergehenden Ansprüche, wobei die Aufnahme (14) des elektronischen Moduls (30) zwei Bereiche umfasst, nämlich einen Antennenbereich (16) auf der Seite des im Wesentlichen konischen axialen Profils und einen Bereich (15) mit elektronischen Komponenten auf der Seite des im Wesentlichen kreisförmigen axialen Profils.

6. Elektronische Baugruppe (1) nach Anspruch 5, wobei der Bereich (15) mit elektronischen Komponenten eine Dicke größer als die des Antennenbereichs (16) umfasst.

7. Elektronische Baugruppe (1) nach einem beliebigen der vorhergehenden Ansprüche, wobei sich die Aufnahme (14) in einem Abstand "d" zu dem Unterteil (12) befindet.

8. Elektronische Baugruppe (1) nach Anspruch 7, wobei unter der Aufnahme (14) eine Luftkammer (17) eingerichtet ist.

9. Elektronische Baugruppe (1) nach Anspruch 8, die einen Schaumstoffeinsatz zum Einsetzen in die Luftkammer (17) beinhaltet.

10. Elektronische Baugruppe (1) nach einem beliebigen der vorhergehenden Ansprüche, wobei die Fläche der Öffnung (13) wesentlich kleiner als die maximale Querschnittsfläche des elektronischen Moduls (30) ist.

11. Elektronische Baugruppe (1) nach einem beliebigen der vorhergehenden Ansprüche, wobei das elektronische Modul (30) dazu ausgelegt ist, Identifikationsdaten des Reifens und Daten in Bezug auf die physikalischen Betriebsparameter des Reifens, an dem die Baugruppe (1) befestigt ist, zu liefern.

## Claims

1. Electronic assembly (1) for a tyre comprising an electronic module (30) and a rubber patch (10) provided with a housing (14) suitable for allowing the positioning of an active part of the electronic module (30) in said housing (14), wherein:
- the patch (10) is configured according to a substantially elongate axial profile with a base (12) and a top (19) separated by a lateral wall (11), said patch (10) comprising a lateral opening (13) communicating with the housing (14), for the insertion and removal of the active part of the electronic module (30) into said housing (14), said opening (13) being arranged on the lateral wall (11);
- the electronic module (30) is configured according to a substantially elongate axial profile and comprises a gripping head (31) extending axially so as to project out of the patch (10) when the active part of the electronic module (30) is positioned in the housing (14);
said electronic assembly (1) being **characterized in that** the gripping head (31) of the electronic module (30) is covered with a protective rubber jacket (20) whose profile is designed to substantially seal the patch (10) when the active part of the electronic module (30) is positioned in its housing (14).

2. Electronic module (1) according to Claim 1, wherein the patch (10) comprises a lateral orifice (18) designed to be in fluidic communication with the cavity in the tyre when the patch (10) is fixed against the inner wall of the tyre.

3. Electronic assembly (1) according to one of Claims 1 and 2, wherein the patch (10) and the housing (14) of the electronic module (30) have, on the side opposite the lateral opening (13), a substantially conical axial profile.

4. Electronic assembly (1) according to any one of the preceding claims, wherein the patch (10) and the housing (14) of the electronic module (30) have, on the side of said lateral opening (13), a substantially circumferential axial profile.

5. Electronic assembly (1) according to any one of the preceding claims, wherein the housing (14) of the electronic module (30) comprises two zones, i.e. an antenna zone (16), on the side of the substantially conical axial profile, and an electronic components zone (15), on the side of the substantially circumferential axial profile.

6. Electronic assembly (1) according to Claim 5, wherein the electronic components zone (15) has a thickness greater than the antenna zone (16).

7. Electronic assembly (1) according to any one of the preceding claims, wherein the housing (14) is situated at a distance "d" from the base (12).

8. Electronic assembly (1) according to Claim 7, wherein an air chamber (17) is arranged under the housing (14).

9. Electronic assembly (1) according to Claim 8, comprising a porous foam insert, for insertion into said air chamber (17).

10. Electronic assembly (1) according to any one of the preceding claims, wherein the surface area of the opening (13) is substantially smaller than the maximum transverse surface area of the electronic module (30).

11. Electronic assembly (1) according to any one of the preceding claims, wherein the electronic module (30) is designed to supply tyre identification data and data relating to the physical operating parameters of the tyre onto which the assembly (1) is fixed.
